# EUROPEAN PATENT SPECIFICATION

(11) **EP 4 353 970 B1**
(45) Date of publication and mention of the grant of the patent: **26.11.2025**
(21) Application number: 22201163.7
(22) Date of filing: 12.10.2022
(51) Int. Cl.: F03G 7/06

(54) **DRIVE UNIT AS WELL AS ACTUATOR COMPRISING A SHAPE MEMORY WIRE SWUNG SEVERAL TIMES AROUND A FOUR-JOINT**
ANTRIEBSEINHEIT SOWIE AKTUATOR MIT EINEM UM EIN VIERGELENK MEHRFACH SCHWENKBAREN FORMGEDÄCHTNISDRAHT
UNITÉ D'ENTRAÎNEMENT AINSI QU'ACTIONNEUR COMPRENANT UN FIL À MÉMOIRE DE FORME ARTICULÉ PLUSIEURS FOIS AUTOUR D'UN JOINT À QUATRE ARTICULATIONS

(43) Date of publication of application: 17.04.2024
(73) Proprietor: Audi AG, 85057 Ingolstadt (DE); Actuator Solutions GmbH, 91710 Gunzenhausen (DE)
(72) Inventor: ROSS, Steffen, 85139 Wettstetten (DE); KAGERER, Markus, 91796 Ettenstatt (DE); PETERREINS, Matthias, 91710 Gunzenhausen (DE); SCHUMM, Tobias, 86742 Fremdingen (DE)
(74) Representative: Hofstetter, Schurack & Partner

(56) References cited:
- WO-A1-2011/059571
- WO-A1-2021/001010
- US-A1- 2007 280 668
- US-A1- 2019 129 132

## Description

The invention relates to a drive unit for an actuator with shape memory drive, comprising a wire, which is formed from a profiled sheet of the material, a transmission unit, to which the at least one wire is attached, for transmitting a force exerted by the at least one wire to the connection unit, wherein the connection unit is configured for force output on an output side of the drive unit, and two contacts for contacting the at least one wire with a control unit. A second aspect of the invention relates to an actuator with such a drive unit. A third aspect of the invention relates to a motor vehicle comprising the named actuator or comprising a drive unit named above, respectively.

Known from the prior art are actuators, which comprise a so-called shape memory material. A shape memory material is characterized in that it decreases its extension in at least one spatial length when heated. Such heating may for instance be effected by a current feed to an electrically conductive shape memory material. As soon as the shape memory material cools down, it becomes elastic again. In this way the shape memory material upon cooling down allows the same to be reset. The cooling down may for instance be effected after an end of the power feed.

Drives, in particular actuators, which contain such a shape memory material, are characterized by a particularly simple setup, compact dimensions, and by largely doing without movable parts. In particular such actuators comprising a shape memory drive or comprising a shape memory material may be employed instead of small electric motors or substitute for these, respectively.

In this context for instance document DE 10 2015 111 894 A1 discloses an actuator comprising a shape memory drive, comprising a drive shaft that is rotatable about a rotation axis and two helical torsion springs wound in opposite directions, which are actively connected with the drive shaft, wherein at least one of the torsion springs consists of a shape memory material which is in a position to adopt a programmed shape by heating. This is based on the insight that shape memory drives due to their high energy density are smaller and/or lighter in weight than electromagnetic drives. Their application involves substantially less noise emission. Due to the operation with direct current a good electromagnetic compatibility is given. Shape memory drives typically contain clearly fewer parts than an electromagnetic actuator. This compensates also for the disadvantage of a relatively expensive shape memory material.

From document EP 2 781 743 B1 it is known an actuator for an exterior mirror of a motor vehicle comprising at least one actuator pin, comprising at least one drum body enclosing a cavity, in which the actuator pin is arranged in a non-rotational manner, comprising at least one adjusting means, which comprises at least one shape memory element fixed to the drum body and with which the drum body is movable in a first rotational direction, and comprising at least one resetting means comprising at least one shape memory element.

To extend the extremely limited displacement of a shape memory drive, from document US 6 574 958 B1 an arrangement is known to facilitate a stroke multiplication without significant force reduction. To this end, the named document discloses a shape memory drive with a stack of parallel conductive sheets, wherein each of the stacked parallel conductive sheets is separated by an insulator, and a set of connections from a shape memory material, which connect the named parallel-stacked conductive sheets with each other.

In analogy from document US 2002/0 113 499 A1 is known a stroke-multiplying shape memory drive comprising at least three parallel elongated members, each of which can be displaced relative to each other along a main extension, and wherein the components each are connected with a further wire formed from the shape memory material so that the stroke of the actuator substantially corresponds to the sum of the respective strokes of the wires.

US-A-2019129132 describes an optical driving mechanism, including a fixed portion, a movable portion, a frame assembly, and a biasing element. The length of the biasing element, which may be wires comprising a shape-memory alloy (SMA), can be changed by applying one or more driving signals (e.g., electrical current) to them from an external power source.

It is the objective of the present invention to simplify the setup of an actuator with shape memory drive whilst maintaining a high stroke and a high force.

According to the invention this objective is solved by the subject matters of the independent patent claims. Advantageous embodiments with expedient further developments are subject matter of the subclaims.

The invention starts from a drive unit for an actuator with a shape memory drive, comprising at least one wire, which is formed from a shape memory material, a transmission unit, to which the at least one wire is attached, for transmitting a force exerted by the at least one wire to the connection unit, wherein the connection unit is configured for force output on an output side of the drive unit, and two contacts for contacting the at least one wire with a control unit. According to the invention, the drive unit distinguishes by the fact that the transmission unit comprises four support elements and four hinge elements, wherein in each case two of the four support elements are connected to one another via a respective one of the hinge elements. The at least one wire may be arranged at least between two of the support elements.

By the four support elements and the four hinge elements in particular a so-called four-joint is formed. In other words, the transmission unit may be configured as four-joint. According to a further development, it is in particular envisaged that the four support elements are arranged in the form of a quadrilateral, in particular an oblique quadrilateral, and/or the four hinge elements form the corners of the quadrilateral, in particular of the oblique quadrilateral. In other words, the four hinge elements may be positioned relative to each other in such a way that by these the corners of a quadrilateral, in particular of an oblique quadrilateral, are formed. Alternatively or additionally, it may be envisaged that the four support elements jointly exhibit the shape of a quadrilateral, in particular of an oblique quadrilateral. In other words, the four support elements may be positioned relative to each other in the form of a quadrilateral. In particular by the four support elements a quadrilateral, in particular oblique quadrilateral area can be enclosed. In this connection it is to be noted that a straight quadrilateral, that is a quadrilateral with 90 degree angle in the corners, as special case of the oblique quadrilateral is equally comprised by this concept.

The at least one wire is attached to the transmission unit. In particular the at least one wire is exactly one wire. The at least one wire may for instance be attached to several attachment points of the transmission unit, in particular to fastening elements arranged on support elements. The transmission unit, in particular the four-joint spanned by the four support elements with the hinge elements, may be configured for a transmission of the force exerted by the wire.

In particular the wire formed from the shape memory material is configured to perform a length contraction in the case of a heating. This length contraction in particular is effected at least substantially along a main extension direction of the wire. Along this main extension direction the wire is elongated. Elongated in this connection in particular means that a length of the wire in its main extension direction exceeds its diameter by a multiple. For instance the wire may be extended along its main extension direction by at least the factor 10 or at least the factor 100 more than along a diameter. In other words, the wire may have an aspect ratio of at least 25 or 100. Of course, this relates in each case to the ratio of length to diameter of the wire.

It may be envisaged that the wire or its shape memory material is elastic at room temperature. In the case of a heating, however, the wire strives for transformation into a shape it has previously been made to memorize. Hence the name shape memory material. Due to this striving into the memorized shape the above-named length contraction occurs. In other words, the wire, in particular its shape memory material, may respond to a heating by the length contraction. The heating may for instance be effected by a current feed to the wire. For this purpose, for instance by the control unit a voltage may be applied to the at least one wire or a current be impressed into the at least one wire. A heating of the wire may then for instance occur as a result of ohmic losses in the wire. A control of the heating may for instance be effected by pulse width modulation of the applied voltage or the impressed current. In other words, the wire is configured to have the current impressed and the voltage applied, respectively, by the two contacts for contacting.

By the force introduction of the at least one wire into the transmission unit, which comprises the four support elements and the four hinge elements or is configured as four-joint, respectively, a lever can be created. By exploiting the lever effect thereby a possible stroke or an exploitable stroke of the actuator in comparison with the length contraction of the wire can be increased. A reduction of the force by the resulting reduction effect can be counteracted by guiding the wire several times between the support elements. The setup is simplified in comparison with the prior art due to the fact that the same wire can be guided several times, which renders an adjustment of a multitude of wire pieces in the case of a cascading unnecessary. Also a respective contacting of the individual wire pieces is thereby not necessary. Rather, the multiply guided wire can be fed with current via the two contacts as a whole.

Each of the four support elements is connected to two adjacent support elements. This connection is provided via a respective one of the four support elements. For instance the four support elements, as described above, may be arranged in the way of the quadrilateral, in particular the oblique quadrilateral. In this connection, the four support elements each may form the lateral surfaces of the quadrilateral. By contrast, the hinge elements may form the corners of the quadrilateral. By each of the four hinge elements two adjacent support elements are connected to one another. The hinge elements may be configured as respective friction bearing, ball bearing, flexure bearing or as any other random bearing. As flexure bearing is designated in particular a thin bar connecting two adjacent support elements with each other. By a reduction of the material strength in the region of the bar or in the region of the flexure bearing a movability of the two support elements connected in this way relative to each other is possible. For instance such a flexure bearing may be implemented as film hinge. In particular the flexure bearing or the bar is formed at least in part from plastic. For instance such a flexure bearing may be manufactured in an injection molding process.

According to a further development, it is envisaged that the at least one wire is arranged on only two of the four support elements, wherein these two support elements are opposite each other. In other words, the at least one wire may run a single time or several times between the two opposite support elements. The two opposite support elements are preferably arranged in parallel to each other. The two opposite support elements are connected to one another by the two other support elements. For instance also the two other support elements for connecting the two opposite support elements may run in parallel to each other. In this way a particularly easy and efficient setup of the drive unit can be ensured.

It is envisaged that the at least one wire between two of the support elements is run back and forth several times, in particular at least four times or at least eight times. In other words, the at least one wire runs several times between the two support elements, in particular the two opposite support elements, in particular at least four times or at least eight times. In particular it may be envisaged that the at least one wire in this connection runs in one piece several times, that is in particular at least four times or at least eight times, between the two support elements. In particular the at least one wire in this connection runs in the form of a meander between the two support elements. By such a multiple arrangement a force that can be provided by the drive unit can be adjusted particularly well to the individual case. The at least one elongated wire thus may run via several turns or 180° reversements, at which the elongated wire is correspondingly deflected.

According to a further development, it is envisaged that the at least one wire runs in one piece via respective deflector elements of the support elements. In particular the respective deflector elements are arranged on the above-named two opposite support elements. In other words, the at least one wire runs, preferably loosely, through the respective deflection elements of the support elements. The above-named multiple or meandering guiding of the wire between the two of the four support elements may thus be facilitated via the respective deflection elements.

According to a further development, it is envisaged that one of the four support elements is provided at least by a printed circuit board, wherein the at least one wire is connected at least on one side via a crimp connection with the printed circuit board. In other words, one of the four support elements may be provided by the printed circuit board. Alternatively, the printed circuit board may be arranged on one of the four support elements or be connected with same. In other words, one of the four support elements in this case may be composed of the printed circuit board and a further component. By the crimp connection, on the one hand, a mechanical and, on the other hand, an electrical connection with the printed circuit board may be provided. In other words, the crimp connection allows for an electrical and mechanical connection between the at least one wire and the printed circuit board, which can be manufactured in a particularly simple and thus low-cost manner. On the printed circuit board the contacts for connecting the at least one wire with the control unit can be provided. In other words, by the printed circuit board at least one of the contacts is provided.

According to a further development, it is envisaged that at least one wire is guided on a first side of the transmission unit meandering in a first direction and is guided on a second side, which is different from the first side, meandering in an opposite second direction. In other words, the wire runs on the first side of the transmission unit meandering in the first direction. On the second side the at least one wire, by contrast, runs meandering in the second direction. In this way it can be ensured that both ends of the at least one wire are arranged in the same region of the drive unit. Hereby a contactability is facilitated. For instance, in this context it may be envisaged that both ends of the wire are connected via a respective crimp connection to the above-named printed circuit board. Between the two crimp connections the at least one wire runs meandering in the first direction on the first side and on the second side meandering in the second direction. In this way a direct contacting of the two ends of the at least one wire, for instance the crimp connection, adjacent to each other is possible.

According to a further development, it is envisaged that exactly two wires run substantially axially symmetrically to each other between the support elements. In particular the term axially symmetrically here refers to a state in which the four support elements are accordingly arranged relative to each other in such a way that a quadrilateral results or in each case 90 degree angles result at the hinge elements. In other words, the exactly two wires may run mirror-inverted to each other between the support elements. In particular this applies to the two opposite support elements, between which the two wires extend. The exactly two wires in this connection are in each case configured in precisely the same way as the above-named at least one wire. In other words, according to this further development exactly two wires are given as the at least one wire. In yet other words, the at least one wire according to the present embodiment comprises exactly two wires. By the axially symmetrical or mirror-inverted arrangement, respectively, of the exactly two wires on the support elements both wires facilitate an antagonistic operation relative to each other. In other words, both of the exactly two wires facilitate a tilting of the four-joint formed by the support elements in each case in opposite direction. A first one of the exactly two wires may for instance be fed with current or heated, whilst the other one cools down and therefore is elastic. The cooled down or elastic wire, respectively, may then be stretched by the respective other wire, when the other wire is fed with current. In other words, the respective cooled down wire can be stretched by the respective wire fed with current, wherein the respective wire fed with current contracts. In this way, however, by the arrangement of the exactly two wires in opposite direction a particularly simple possibility of facilitating a movement of the drive unit in two different directions is provided. Alternatively or additionally, however, also an arrangement of a spring or a spring element, respectively, for instance a coil spring, a torsion spring, or a rubber band as antagonists is possible. In this case a force output in a direction by a wire may be effected, whilst the force output in a different direction is effected by the reset forces of the elastic antagonist.

A second aspect of the invention relates to an actuator comprising a frame as well as a drive unit according to the invention. Optionally, the actuator may moreover comprise the control unit. The control unit may be contacted via the two contacts with the at least one wire. By the contraction of the at least one wire upon a heating or current feed, respectively, a relative motion of at least several of the support elements or the four-joint formed by the support elements relative to the frame may be effected. The control unit may be configured for controlling a movement of the actuator by corresponding current feed to the at least one wire. In particular the control unit is configured for this purpose for feeding current to the at least one wire with PWM pulses.

According to a further development, it is envisaged that at least one of the support elements and/or at least one of the joints is coupled to a gear ring element of the actuator in a torque-resistant manner. For example the transmission unit may be coupled via the connection unit to the gear ring element of the actuator. The transmission unit may be configured to transform, optionally in interaction with the connection unit, the tensile movement, which also is effected as rotation of the at least one wire, into a rotation of the gear ring element. In other words, by a suitable interaction of transmission unit and gear ring element (and optionally the connection unit) in an operation of the actuator the length contraction of the at least one wire is transformed into a rotation of the gear ring element or the rotation of the gear ring element caused, respectively. The gear ring element facilitates a provision of the force exerted by the at least one wire in the form of a rotary movement or in the form of a torque, respectively.

For example the gear ring element may be a gear wheel or a section from a gear wheel. A section from a gear wheel may for instance be a circular segment or a circular sector, on the external surface of which a gear ring is arranged.

According to a further development, it is envisaged that the actuator comprises a brake element, which is fixed to the frame and in a brake state of the actuator engages the gear ring element. In other words, it may be envisaged that the brake element, which is for instance implemented as a tooth corresponding to the gear ring element, engages the gear ring element in the brake state and in this way brakes or prevents, respectively, a rotation of the gear ring element. In this way the actuator in the brake state, for instance a non-operating state, can be passively braked.

According to a further development, it is envisaged that the actuator comprises two similar drive units, wherein the exactly two similar drive units are arranged symmetrically to each other. For example two adjacent support elements of the two drive units run in parallel to each other. It may also be the case that the two drive units share one of the support elements. In other words, in this case one of the support elements may be one of the four support elements of the first drive unit as well as one of the four support elements of the second drive unit. A symmetry plane with regard to the symmetry of the two drive units extends in particular centrally through the adjacent support elements of the two drive units and/or the common support element of the two drive units. In other words, a mirror-inverted setup of the two drive units in the actuator may be given. In this way an antagonistic operation of the two drive units can be ensured.

A third aspect of the present invention relates to a motor vehicle comprising an actuator, which forms part of the present invention. In particular the actuator in the motor vehicle according to the invention may be an actuating drive for adjusting a vehicle device of the motor vehicle. For instance the actuator may be employed in an external mirror of the motor vehicle.

The motor vehicle according to the invention is preferably designed as motor vehicle, in particular as passenger car or truck, or as passenger bus or motorcycle.

The invention also comprises the combinations of the features of the described embodiments.

In the following embodiments of the invention are described. In this connection it is shown in:
- Fig. 1: in a schematic lateral view a drive unit for an actuator with shape memory drive;
- Fig. 2: a section of the drive unit in a schematic perspective view;
- Fig. 3: in a schematic lateral view an embodiment of a drive unit comprising two antagonistically arranged wires;
- Fig. 4: an actuator with shape memory drive according to a first exemplary embodiment in a schematic lateral view; and
- Fig. 5: an actuator with shape memory drive according to a second exemplary embodiment in a schematic sectional view.

The exemplary embodiments set out in the following are preferred embodiments of the invention. In the exemplary embodiments the described components of the embodiments are in each case individual features of the invention that are to be considered independently of each other and which further develop the invention in each case also independently of each other. Therefore the disclosure should also comprise other combinations of the features of the embodiments than the ones represented. Moreover, the described embodiments also can be supplemented by further ones of the already described features of the invention.

In the figures same reference signs designate in each case functionally identical elements.

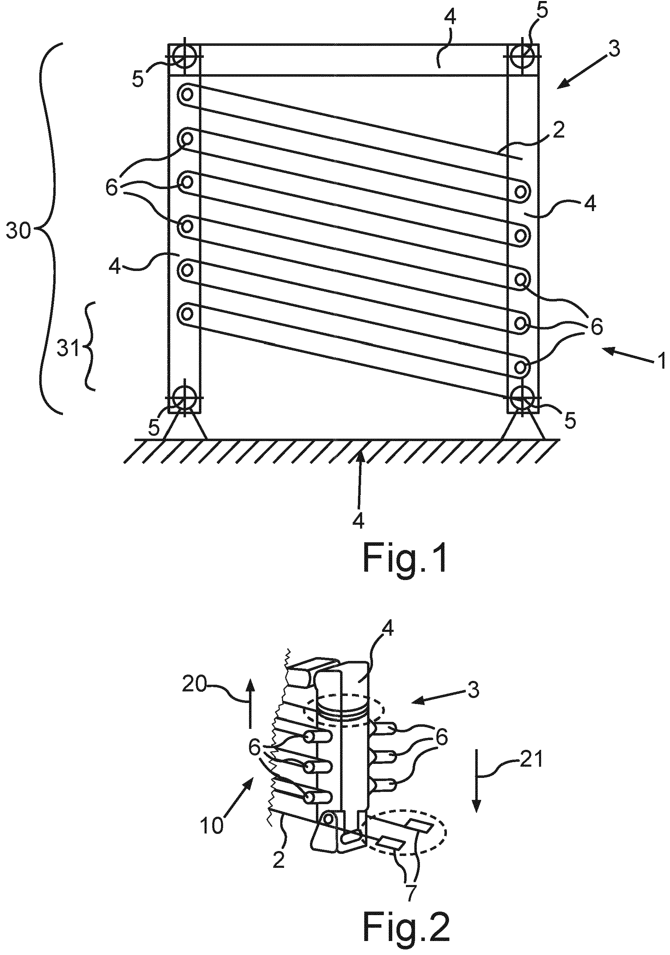

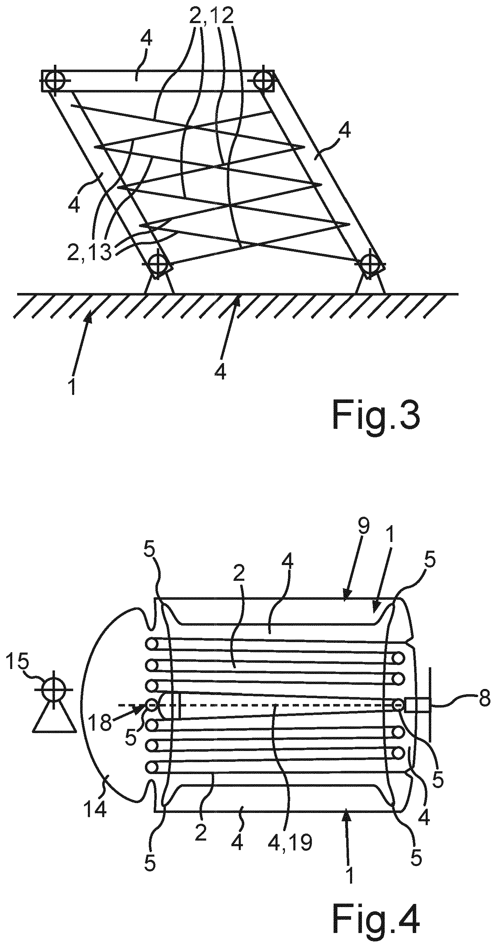

Fig. 1 shows a drive unit 1 for an actuator with shape memory drive. The drive unit 1 comprises an elongated wire, in the instant example exactly one wire 2. The wire 2 is formed from a shape memory material. The wire 2 or its shape memory material, respectively, is configured to respond to a heating by a length contraction and a contraction along its main extension direction, respectively. This heating may in particular be generated by a current feed to the wire 2. For the current feed the wire 2 according to Fig. 2 comprises two contacts 7. The contacts 7 facilitate a contacting of the wire 2 with the control unit 8 of the actuator, as shown in Fig. 4.

The drive unit 1 comprises a transmission unit 3 comprising four support elements 4 and four hinge elements 5. Adjacent support elements 4 are each connected via a hinge element 5 to one another. The transmission unit 3 is preferably implemented as so-called four-joint. In other words, the support elements 4 and the hinge elements 5 jointly may form a quadrilateral. Depending on the embodiment, it may be envisaged that one of the support elements is substituted for by a solid component. In the present case, in Fig. 1 and Fig. 3, this is the case on the bottom side of the drive unit. In other words, one of the four support elements 4 in the present example is provided by a solid component part of another component, such as a case part of the drive unit or a drive holding framework. For example one of the four support elements 4 may be provided by a bodywork component of a motor vehicle. In the present example of Fig. 3 the four support elements 4 are arranged according to a quadrilateral, in particular an oblique quadrilateral.

Regardless of whether the four support elements 4 form a quadrilateral or an oblique quadrilateral, the four hinge elements 5 in the present case are positioned in the corners of a quadrilateral, in particular an oblique quadrilateral. In the present case, for example, it is the same quadrilateral, which is spanned by the support elements 4 and the hinge elements 5. However, this is to be taken purely in an exemplary way. It is pointed out that as oblique quadrilateral in the sense of the present invention also a straight quadrilateral, which represents a special case of the general, oblique quadrilateral. Equally, a square represents a special case of a rectangle, for which reason a square is explicitly comprised by the concept of the oblique rectangle.

The hinge elements 5 in the present example are implemented as ball bearings or as friction bearings. In the following exemplary embodiment an alternative design of the hinge elements as flexure bearing or film hinge is shown. In general a random implementation of the hinge elements 5 is conceivable.

The wire 2 is guided back and forth several times between two opposite support elements 4. In other words, the wire runs exactly between two of the four support elements 4. These two support elements 4 are opposite each other. In other words, the two support elements 4 are spaced apart from each other by the two other support elements 4. The wire 2 runs multiple times, in particular at least four times or at least eight times, between the opposite support elements 4. In the present exemplary embodiment the wire 2 is guided in the form of a meander. In this connection the one wire 2 is guided in one piece via respective deflection elements 6 on the two opposite support elements 4. In other words, the wire 2 is not attached to the respective support elements 4, but only deflected. In this way it is facilitated to guide the wire several times back and forth in one piece. This renders a handling and a manufacture of the drive unit 1 significantly easier. Moreover, no contacting of different subportions of the wire 2 is necessary, rather the entire wire 2 can be fed with current via the exactly two contacts 7.

By reference to Fig. 2 it can be seen that the wire 2 is both guided on a first side 10 as well as on a second side of the transmission unit 3. This cannot be recognized in the lateral view of Fig. 1. The wire 2 is guided on the first side 10 meandering in a first direction 20. On the second side the wire 2 is guided meandering in a second direction 21. The first direction 20 and the second direction 21 are opposite to each other. By this kind of guiding of the wire 2 the two contacts 7 are located on the bottom side of the drive unit 1. A contacting and a manufacture of the drive unit 1 is thereby simplified.

The present drive unit 1 for extension of an exploitable stroke of the drive unit exploits a lever resulting from the guiding of the wire 2 between the support elements 4. Therein the wire 2 pulls with the lever 31 represented in Fig. 1 between the two opposite support elements 4. The stroke of the drive unit 1 in this connection, however, results according to the much larger lever 30. In the case of the meandering guiding of the wire 2 between the support elements 4 for each deflection element 6 each the same lever 31 results. For the sake of clarity, the lever 31 is also drawn only once. Also the output lever 30 is in each case the same at each point of contact of the wire in the corresponding deflection elements 6. Therefore an extension of the stroke according to the proportion of the lever 30 and 31 to each other is the result. A decrease in force by the corresponding lever is counteracted by guiding the wire 2 back and forth several times between the support elements 4.

Supplementing the exemplary embodiment of Fig. 1 and Fig. 2, Fig. 3 shows a further embodiment of the drive unit 1. According to this embodiment the drive unit 1 comprises exactly two wires 2, further differentiated between each other by numerals 12 and 13. The two wires 12, 13 in this connection are switched antagonistically to each other. For this purpose, the two wires 12, 13 are arranged axially symmetrically or mirror-inverted relative to each other, respectively, between the opposite support elements 4. In other words, a second wire 13 extends exactly in the opposite direction to a first wire 12. In this way a contraction of the first wire 12 generates a tilting of the transmission unit 3 in the opposite direction than a contraction of the second wire 13. By feeding current to the corresponding wire 12, 13 a movement of the drive unit 1 or of an actuator based thereon on both sides is possible.

Fig. 4 shows an actuator 9, which is composed of two drive units 1. Each of these two drive units 1 therein comprises exactly one wire 2. The two drive units 1 are antagonistically switched within the actuator 9. A central support element 19, which is commonly used by the two drive units 1, is provided by a frame of the actuator 9. In other words, the two drive units 1 are connected via the two hinge elements 5, which are adjacent to the dashed suggested common support element 19, are connected with the frame of the actuator 9. The dashed line, which represents the common support element 19, is simultaneously a symmetry axis with regard to the two drive units 1. By this symmetry the antagonistic switching of the two drive units 1 is ensured. On the output side the actuator 9 comprises a gear ring element 14, which engages a gear wheel 15. Jointly the gear ring element 14 and the gear wheel 15 facilitate a provision of a drive force of the actuator 9 in the form of a torque. A rotation axis 18 of the gear ring element 14 is provided by one of the hinge elements 5. In other words, one of the hinge elements 5 at the same time forms the rotation axis 18 for the gear ring element 14. In particular this is a hinge element 5, which is part of the two drive units 1. In other words this is one of the hinge elements 5, which are adjacent to the common support element 19.

Preferably it is envisaged that exactly the two hinge elements 5 which are adjacent to the commonly used support element 19 are implemented as ball bearing or friction bearing. In the present example the remaining hinge elements are implemented as flexure bearing or as film hinge, respectively. In other words, in each case three of four support elements of the two drive units 1 are implemented as a single piece over the remaining hinge elements 5. In other words, this is a common component, wherein the subdivision into the different support elements is facilitated by the tapering in the region of the flexure bearings or the film hinges, respectively. This results in a setup of the drive units or of the actuator 9, respectively, that can be manufactured in a particularly simple and low-cost manner. In Fig. 4 equally represented is the control unit 8 for controlling the actuator 9. The control unit 8 is connected to the respective wire of the drive units 1 via the contacts 7 (such as the ones shown in Fig. 2) in an electrically conductive manner. For instance the control unit 8 is configured to heat the wires 2 by current feed. For example the control unit 8 for this purpose applies a corresponding voltage pulse or current pulse to the corresponding wire 2. The voltage or current pulse, respectively, in this connection can be provided as part of a pulse width modulation. In this way the actuator 9 can be controlled in a particularly simple and efficient way.

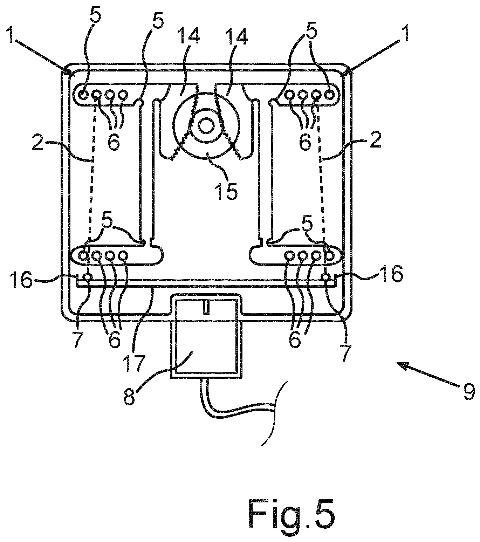

Finally, Fig. 5 shows an alternative embodiment of an actuator 9. In this embodiment the drive units 1 are clearly separated from each other. The gear wheel 15 in this embodiment is arranged centrally between the two drive units 1. On both drive units 1 a respective gear ring element 14 is arranged on the output side. Each of the drive units 1 by a drive force resulting from the contraction of the respective wire 2 facilitates a rotation of the gear wheel 15 in exactly one direction. Here, too, the two drive units 1 are provided in an antagonistic manner relative to each other. In other words, the drive units 1 each facilitate a rotation in different directions of the gear wheel 15. Also in the embodiment according to Fig. 5 the hinge elements 5 are partly provided as flexure bearing and partly as ball bearing or friction bearing.

A contacting of the wires 2 in the present case is effected via a printed circuit board 17. The contacts 7 are provided via a respective crimp connection 16. By the crimp connection 16 both a mechanical as well as an electrical contacting of the respective wire 2 is ensured. In other words, the crimp connection 16, on the one hand, facilitates a mechanical fixing of the respective wire 2 to the printed circuit board 17 as well as a contacting. This allows for a further reduction of the production expense of the actuator 9. The respective wires 2 are shown only in excerpts in Fig. 5. This is the case for reasons of clarity. It is to be noted that the respective wire 2 of both drive units 1 is arranged also in the embodiment of Fig. 5 in analogy to the representation of Fig. 2. In other words, the respective wire 2 is guided on both sides in the form of a meander. The respective two contacts 7 therefore in the case of the representation in the present perspective are located one behind the other. For this reason only two of the overall four contacts 7 and crimp connections 16 can be recognized in Fig. 5.

Overall, the examples show how a drive for an actuator can be provided.

The present invention is not limited to a specific type of shape memory alloy (SMA) wire, even though from a geometrical point of view SMA wires with a diameter comprised between 0.010 mm and 5 mm are preferred. In this regard it is important to underline that, as the shape memory alloy wires are real objects, they may depart from a circular section. Therefore the term diameter may be understood as the diameter of the smallest enclosing circle.

Furthermore, the invention is not limited to any specific shape memory alloy material, even though Ni-Ti based alloys are preferred such as Nitinol that may exhibit alternately a superelastic wire behavior or shape memory alloy behavior according to its processing. The properties of Nitinol and methods allowing to achieve them are widely known to those skilled in the art, see e.g. the article "A Study of the Properties of a High Temperature Binary Nitinol Alloy Above and Below its Martensite to Austenite Transformation Temperature" by Dennis W. Norwich presented at the SMST 2010 conference.

## Claims

1. Drive unit (1) for an actuator (9) with shape memory drive, comprising
- at least one wire (2), which is formed from a shape memory material,
- a transmission unit (3), to which the at least one wire (2) is attached, for transmitting a force exerted by the at least one wire (2) to a connection unit, wherein the connection unit is configured for force output on an output side of the drive unit (1), and
- two contacts (7) for contacting the at least one wire (2) with a control unit (8),
wherein
the transmission unit (3) comprises four support elements (4) and four hinge elements (5), wherein in each case two of the four support elements (4) are connected to one another via a respective one of the hinge elements (5)
**characterized in that**
the at least one wire (2) between two of the support elements (4) is guided back and forth several times, in particular at least four times or at least eight times.

2. Drive unit (1) according to claim 1,
**characterized in that**
the four support elements (4) are arranged in the form of a quadrilateral, in particular of an oblique quadrilateral, and/or the four hinge elements (5) form the corners of the quadrilateral, in particular of the oblique quadrilateral.

3. Drive unit (1) according to claim 1 or 2,
**characterized in that**
the at least one wire (2) is arranged at only two of the four support elements (4), wherein these two support elements (4) face each other.

4. Drive unit (1) according to any one of the preceding claims,
**characterized in that**
the at least one wire (2) runs in one piece over respective deflector elements (6) of the support elements (4).

5. Drive unit (1) according to any one of the preceding claims,
**characterized in that**
one of the four support elements (4) is provided at least by a printed circuit board (17), wherein the at least one wire (2) is connected at least on one side via a crimp connection (16) with the printed circuit board (17).

6. Drive unit (1) according to any one of the preceding claims,
**characterized in that**
the at least one wire (2) on a first side (10) of the transmission unit (3) is guided meandering in a first direction (20) and on a second side that is different from the first side (10) is guided meandering in an opposite second direction (21).

7. Drive unit (1) according to any one of the preceding claims,
**characterized in that**
exactly two wires (2) run mirror-inverted to each other between the support elements (4).

8. Actuator (9) comprising a frame and a drive unit (1) according to any one of the preceding claims.

9. Actuator (9) according to claim 8,
**characterized in that**
at least one of the support elements (4) and/or at least one of the hinge elements (5) is coupled in a torque-resistant manner with a gear ring element (14) of the actuator (9).

10. Actuator (9) according to claim 9,
**characterized by**
a brake element, which is fixed to the frame and in a brake state of the actuator (9) engages the gear ring element (14).

11. Actuator (9) according to any one of claims 9 to 10,
**characterized in that**
the actuator (9) comprises two similar drive units (1) according to one of claims 1 to 8, wherein the two drive units (1) are arranged symmetrically to each other.

12. Motor vehicle comprising an actuator (9) according to any one of claims 8 to 11.

## Patentansprüche

1. Antriebseinheit (1) für einen Aktuator (9) mit einem Formgedächtnisantrieb, die umfasst
- mindestens einen Draht (2), der aus einem Formgedächtnismaterial ausgebildet ist,
- eine Übertragungseinheit (3), an der der mindestens eine Draht (2) befestigt ist, zum Übertragen einer durch den mindestens einen Draht (2) ausgeübten Kraft zu einer Verbindungseinheit, wobei die Verbindungseinheit für eine Kraftausgabe auf einer Abtriebsseite der Antriebseinheit (1) eingerichtet ist, und
- zwei Kontakte (7) zum Kontaktieren des mindestens einen Drahts (2) mit einer Steuereinheit (8),
wobei
die Übertragungseinheit (3) vier Stützelemente (4) und vier Gelenkelemente (5) umfasst, wobei in jedem Fall zwei der vier Stützelemente (4) über ein jeweiliges der Gelenkelemente (5) miteinander verbunden sind,
**dadurch gekennzeichnet, dass**
der mindestens eine Draht (2) zwischen zwei der Stützelemente (4) mehrere Male, insbesondere mindestens viermal oder mindestens achtmal, hin und her geführt ist.

2. Antriebseinheit (1) nach Anspruch 1,
**dadurch gekennzeichnet, dass**
die vier Stützelemente (4) in Form eines Vierecks, insbesondere eines schiefwinkligen Vierecks, angeordnet sind, und/oder die vier Gelenkelemente (5) die Ecken des Vierecks, insbesondere des schiefwinkligen Vierecks, bilden.

3. Antriebseinheit (1) nach Anspruch 1 oder 2,
**dadurch gekennzeichnet, dass**
der mindestens eine Draht (2) an nur zwei der vier Stützelemente (4) angeordnet ist, wobei diese zwei Stützelemente (4) einander gegenüberliegen.

4. Antriebseinheit (1) nach einem der vorangehenden Ansprüche,
**dadurch gekennzeichnet, dass**
der mindestens eine Draht (2) in einem Stück über jeweilige Ablenkelemente (6) der Stützelemente (4) verläuft.

5. Antriebseinheit (1) nach einem der vorangehenden Ansprüche,
**dadurch gekennzeichnet, dass**
eines der vier Stützelemente (4) zumindest durch eine gedruckte Leiterplatte (17) vorgesehen ist, wobei der mindestens eine Draht (2) zumindest auf einer Seite über eine Quetschverbindung (16) mit der gedruckten Leiterplatte (17) verbunden ist.

6. Antriebseinheit (1) nach einem der vorangehenden Ansprüche,
**dadurch gekennzeichnet, dass**
der mindestens eine Draht (2) auf einer ersten Seite (10) der Übertragungseinheit (3) mäanderförmig in einer ersten Richtung (20) geführt ist, und auf einer zweiten Seite, die von der ersten Seite (10) verschieden ist, mäanderförmig in einer entgegengesetzten zweiten Richtung (21) geführt ist.

7. Antriebseinheit (1) nach einem der vorangehenden Ansprüche,
**dadurch gekennzeichnet, dass**
exakt zwei Drähte (2) spiegelverkehrt zueinander zwischen den Stützelementen (4) verlaufen.

8. Aktuator (9) mit einem Rahmen und einer Antriebseinheit (1) nach einem der vorangehenden Ansprüche.

9. Aktuator (9) nach Anspruch 8,
**dadurch gekennzeichnet, dass**
mindestens eines der Stützelemente (4) und/oder mindestens eines der Gelenkelemente (5) in einer drehfesten Weise mit einem Zahnkranzelement (14) des Aktuators (9) gekoppelt ist.

10. Aktuator (9) nach Anspruch 9,
**gekennzeichnet durch**
ein Bremselement, das am Rahmen fixiert ist und in einem Bremszustand des Aktuators (9) mit dem Zahnkranzelement (14) in Eingriff steht.

11. Aktuator (9) nach einem der Ansprüche 9 bis 10,
**dadurch gekennzeichnet, dass**
der Aktuator (9) zwei ähnliche Antriebseinheiten (1) nach einem der Ansprüche 1 bis 8 umfasst, wobei die zwei Antriebseinheiten (1) symmetrisch zueinander angeordnet sind.

12. Kraftfahrzeug mit einem Aktuator (9) nach einem der Ansprüche 8 bis 11.

## Revendications

1. Unité (1) d'entraînement pour actionneur (9) avec entraînement à mémoire de forme, comportant
- au moins un fil (2), qui est formé d'un matériau à mémoire de forme,
- une unité (3) de transmission, à laquelle le ou les fils (2) sont fixés, servant à transmettre une force exercée par le ou les fils (2) à une unité de liaison, l'unité de liaison étant configurée pour une sortie d'effort sur un côté sortie de l'unité (1) d'entraînement, et
- deux contacts (7) servant à mettre en contact le ou les fils (2) avec une unité (8) de commande,
dans laquelle
l'unité (3) de transmission comporte quatre éléments porteurs (4) et quatre éléments (5) d'articulation, deux des quatre éléments porteurs (4) étant, dans chaque cas, reliés entre eux par l'intermédiaire d'un élément respectif parmi les éléments (5) d'articulation
**caractérisée en ce que**
le ou les fils (2) entre deux des éléments porteurs (4) sont guidés de façon à aller et venir plusieurs fois, en particulier au moins quatre fois ou au moins huit fois.

2. Unité (1) d'entraînement selon la revendication 1, **caractérisée en ce que**
les quatre éléments porteurs (4) sont agencés sous la forme d'un quadrilatère, en particulier d'un quadrilatère oblique, et/ou les quatre éléments (5) d'articulation forment les coins du quadrilatère, en particulier du quadrilatère oblique.

3. Unité (1) d'entraînement selon la revendication 1 ou 2,
**caractérisée en ce que**
le ou les fils (2) sont agencés au niveau de seulement deux des quatre éléments porteurs (4), ces deux éléments porteurs (4) se faisant face.

4. Unité (1) d'entraînement selon l'une quelconque des revendications précédentes,
**caractérisée en ce que**
le ou les fils (2) circulent d'un seul tenant par-dessus des éléments déviateurs (6) respectifs des éléments porteurs (4).

5. Unité (1) d'entraînement selon l'une quelconque des revendications précédentes,
**caractérisée en ce que**
un des quatre éléments porteurs (4) est constitué au moins par une carte (17) à circuit imprimé, le ou les fils (2) étant reliés au moins d'un côté à la carte (17) à circuit imprimé par l'intermédiaire d'une liaison sertie (16).

6. Unité (1) d'entraînement selon l'une quelconque des revendications précédentes,
**caractérisée en ce que**
le ou les fils (2) d'un premier côté (10) de l'unité (3) de transmission sont guidés de façon sinueuse dans un premier sens (20) et, d'un second côté qui est différent du premier côté (10), sont guidés de façon sinueuse dans un second sens (21) opposé.

7. Unité (1) d'entraînement selon l'une quelconque des revendications précédentes,
**caractérisée en ce que**
exactement deux fils (2) circulent avec une symétrie de réflexion l'un par rapport à l'autre entre les éléments porteurs (4).

8. Actionneur (9) comportant une ossature et une unité (1) d'entraînement selon l'une quelconque des revendications précédentes.

9. Actionneur (9) selon la revendication 8,
**caractérisé en ce que**
au moins un des éléments porteurs (4) et/ou au moins un des éléments (5) d'articulation sont couplés d'une manière résistant au couple avec un élément (14) de couronne dentée de l'actionneur (9).

10. Actionneur (9) selon la revendication 9,
**caractérisé par**
un élément de frein qui est fixé à l'ossature et, dans un état de freinage de l'actionneur (9), est en prise avec l'élément (14) de couronne dentée.

11. Actionneur (9) selon l'une quelconque des revendications 9 à 10,
**caractérisé en ce que**
l'actionneur (9) comporte deux unités (1) d'entraînement similaires selon une des revendications 1 à 8, les deux unités (1) d'entraînement étant agencées symétriquement l'une à l'autre.

12. Véhicule à moteur comportant un actionneur (9) selon l'une quelconque des revendications 8 à 11.
